(19) Europäisches Patentamt
European Patent Office
Office européen des brevets

(11) **EP 1 529 185 B1**

(12) **FASCICULE DE BREVET EUROPEEN**

(45) Date de publication et mention
de la délivrance du brevet:
**21.02.2007 Bulletin 2007/08**

(21) Numéro de dépôt: **03771134.8**

(22) Date de dépôt: **11.07.2003**

(51) Int Cl.:
*F25B 17/00* (2006.01)     *F25B 39/02* (2006.01)

(86) Numéro de dépôt international:
**PCT/FR2003/002217**

(87) Numéro de publication internationale:
**WO 2004/011858 (05.02.2004 Gazette 2004/06)**

(54) **INSTALLATION ET PROCEDE POUR LA PRODUCTION DE FROID PAR UN SYSTEME A SORPTION RENVERSABLE.**

VERFAHREN UND ANLAGE ZUR KÄLTEERZEUGUNG MIT EINER REVERSIBLEN SORPTIONKÄLTEMASCHINE

INSTALLATION AND METHOD FOR PRODUCING COLD BY A REVERSIBLE SORPTION SYSTEM

(84) Etats contractants désignés:
**AT BE BG CH CY CZ DE DK EE ES FI FR GB GR HU IE IT LI LU MC NL PT RO SE SI SK TR**

(30) Priorité: **24.07.2002 FR 0209390**

(43) Date de publication de la demande:
**11.05.2005 Bulletin 2005/19**

(73) Titulaire: **Centre National de la Recherche Scientifique**
**75016 Paris (FR)**

(72) Inventeurs:
• **STITOU, Driss**
  **F-66570 ST NAZAIRE (FR)**
• **SPINNER, Bernard**
  **F-66100 PERPIGNAN (FR)**
• **BERTRAND, Olivier**
  **F-13370 Mallemort (FR)**

(74) Mandataire: **Sueur, Yvette**
**Cabinet SUEUR et L'HELGOUALCH,**
**109, boulevard Haussmann**
**75008 Paris (FR)**

(56) Documents cités:
**EP-A- 0 810 410**          **FR-A- 2 615 601**

**Description**

L'invention concerne une installation et un procédé pour le production de froid par un système à sorption renversable, notamment pour la congélation de divers produits ou pour la production d'eau fraîche ou de glaçons.

On connaît des installations de production de chaleur ou de froid basées sur des changements de phase liquide/gaz ou des sorptions renversables entre un gaz, dit gaz de travail, et un sorbant liquide ou solide. Une sorption renversable peut être une absorption d'un gaz par un liquide, une adsorption d'un gaz sur un solide, ou une réaction entre un gaz et un solide. Une sorption renversable entre un sorbant S et un gaz G est exothermique dans le sens de la synthèse S + G → SG, et endothermique dans le sens de la décomposition SG → S + G. Dans un changement de phase liquide/gaz de G, la condensation est exothermique et l'évaporation est endothermique.

Ces phénomènes renversables peuvent être représentés sur le diagramme de Clausius-Clapeyron par leur droite d'équilibre

$$\ln P = f(-1/T), \text{ plus précisément } \ln P = -\frac{\Delta H}{RT} + \frac{\Delta S}{R}$$

P et T étant respectivement la pression et la température, $\Delta H$ et $\Delta S$ étant respectivement l'enthalpie et l'entropie du phénomène (décomposition, synthèse, évaporation, condensation) mis en jeu, et R étant la constante des gaz parfaits.

L'étape endothermique peut être mise à profit dans une installation de ce type pour congeler divers produits (notamment de l'eau pour l'obtention de glaçons) ou pour la production d'eau froide.

Ainsi, EP0810410 décrit un dispositif comprenant un réacteur et un évaporateur/condenseur reliés par une conduite munie d'une vanne. Le réacteur est le siège d'une réaction thermochimique ou d'une adsorption solide-gaz. Il comprend des moyens pour chauffer le solide qu'il contient et de moyens pour éliminer la chaleur de la réaction de synthèse exothermique, ces moyens étant constitués soit par un échangeur de chaleur, soit par l'augmentation de la masse thermique du réacteur. Le réacteur est aménagé de telle sorte qu'avec son contenu, il ait une masse thermique suffisante pour absorber la chaleur produite lors de la réaction exothermique. Le procédé de gestion de ce dispositif consiste à mettre en communication l'évaporateur/condenseur avec le réacteur lorsque l'évaporateur/condenseur est rempli du gaz de travail sous forme liquide, ce qui a pour effet de refroidir l'évaporateur/ condenseur par évaporation, puis à mettre en marche les moyens destinés à chauffer le solide afin de refouler et condenser le gaz vers l'évaporateur/ condenseur. La mise en marche des moyens destinés à réchauffer le solide dans le réacteur débute avant que l'étape précédente ne soit terminée. Le froid produit à l'évaporateur/condenseur peut être utilisé pour produire de l'eau froide ou des glaçons. Toutefois, dans ce dispositif, les temps de cycles sont relativement longs du fait que la régénération du dispositif se fait à haute température Th et que le refroidissement du réacteur se fait à la température ambiante To. Par conséquent, le réacteur parcourt une amplitude thermique entre la température de régénération et la température ambiante relativement importante, ce qui induit un faible coefficient de performance.

Le but de la présente invention est de fournir un dispositif permettant une production frigorifique volumique très élevée, par exemple de l'ordre de 200 kW/m$^3$, à une température utile $T_U$ relativement basse et avec des durées de cycles fortement réduites et des performances plus intéressantes. Par température utile, on entend la température de congélation de produits (congélation de l'eau pour produire de la glace ou congélation d'autres produits) ou la température à laquelle on veut abaisser et maintenir des produits sans les congeler (par exemple pour obtenir de l'eau fraîche).

Une installation selon la présente invention pour la production de froid à la température $T_U$ comprend un réacteur (1) qui est le siège d'une sorption renversable $P_{HT}$ mettant en jeu un gaz G et un sorbant S, un dispositif (2) siège d'un phénomène renversable $P_{BT}$ qui met en jeu le gaz G, des moyens pour mettre le dispositif (2) en communication avec le réacteur (1) et des moyens pour isoler le réacteur (1) du dispositif (2), la courbe d'équilibre du phénomène renversable dans (2) étant située dans un domaine de température plus faible que celui de la courbe d'équilibre de la sorption renversable dans (1) dans le diagramme de Clapeyron.

L'installation est caractérisée en ce que le dispositif (2) contient, outre le gaz G, un matériau à changement de phase liquide/solide M ayant une température de solidification $T_S$ inférieure à la température utile de production de froid $T_U$. Il suffit que l'écart de température entre $T_S$ et $T_U$ soit de l'ordre de quelques degrés, par exemple de l'ordre de 1°C à 10°C.

Le matériau à changement de phase peut être choisi par exemple parmi les paraffines telles que les n-alcanes ayant de 10 à 20 atomes de carbone, les mélanges eutectiques et les solutions eutectiques.

La sorption renversable dans le réacteur (1) peut être choisie parmi les réactions chimiques renversables entre le gaz G et un solide, les adsorptions du gaz G sur un solide, et les absorptions du gaz G par un liquide.

Le phénomène renversable dans le dispositif (2) peut être choisi parmi les réactions chimiques renversables entre le gaz G et un solide, les adsorptions du gaz G sur un solide, les absorptions du gaz G par un liquide, les changements de phase liquide/gaz du gaz G. Les changements de phase liquide/gaz sont préférés, car ils permettent de produire du froid avec une plus grande vitesse qu'avec des sorptions, du fait de la plus faible inertie thermique du système.

Comme exemple de gaz G, on peut citer l'ammoniac ($NH_3$) et ses dérivés, l'hydrogène ($H_2$), le dioxyde de carbone ($CO_2$), l'eau ($H_2O$), le sulfure d'hydrogène ($H_2S$), le méthane et d'autres gaz naturels. Comme réaction de sorption, on peut citer les réactions utilisant des ammoniacates (par exemple des chlorures, des bromures, des iodures ou des sulfates), des hydrates, des carbonates ou des hydrures.

L'étape de synthèse exothermique dans le réacteur (1) qui est concomitante à l'étape de dissociation générant le froid dans le dispositif (2), est favorisée si le contenu du réacteur (1) est maintenu à une température inférieure à sa température d'équilibre à la pression qui règne dans le réacteur (1). Il est donc préférable de neutraliser l'action de la chaleur produite à mesure que la synthèse se déroule dans le réacteur (1) afin de maintenir l'écart le plus important possible entre la température réelle du réacteur (1) et sa température d'équilibre. Cette chaleur produite est dans un premier temps absorbée par le réacteur et son contenu. Lorsque la masse thermique du réacteur et de son contenu ne suffit pas pour absorber la totalité de la chaleur dégagée, il est préférable de munir le réacteur (1) de moyens pour évacuer la chaleur vers l'extérieur.

Dans une installation selon l'invention, la production de froid a lieu au niveau du dispositif (2). Si le froid produit est destiné à la production de glaçons ou d'eau froide, le dispositif (2) est en contact thermique direct avec un réservoir (3) contenant de l'eau. Si l'on veut produire des glaçons, on utilise de préférence un réservoir (3) compartimenté à la taille des glaçons souhaités. Lorsque l'installation est utilisée pour fabriquer de l'eau froide, le réservoir (3) peut être un serpentin dans lequel circule de l'eau, intégré à la paroi du dispositif (2). Si l'installation est destinée à congeler des produits divers, le réservoir (3) a la forme adéquate pour contenir et congeler les produits.

Le matériau à changement de phase liquide/solide est choisi de telle sorte qu'il ait une température de solidification $T_S$ inférieure de quelque degrés à la température utile $T_U$, c'est-à-dire la température du produit à congeler ou à refroidir, par exemple en dessous de 0°C lorsque le but recherché est la fabrication de glaçons, ou inférieure à la température de l'eau froide que l'on souhaite obtenir.

L'invention a également pour objet un procédé pour la production de froid par un système thermochimique comprenant au moins deux phénomènes renversables utilisant un gaz G, dans lequel le froid est produit lors de l'étape de dissociation du phénomène renversable $P_{BT}$ dont la courbe d'équilibre dans le diagramme de Clapeyron se situe dans le domaine des basses températures, et le système est régénéré lors de l'étape de dissociation du phénomène renversable $P_{HT}$ dont la courbe d'équilibre dans le diagramme de Clapeyron se situe dans le domaine des températures élevées. Il est caractérisé en ce que l'on prolonge l'étape de production de froid au-delà de la fin de l'étape de dissociation du phénomène $P_{BT}$ par la fusion d'un matériau à changement de phase solide/liquide en contact thermique avec le gaz G dans le réacteur qui est le siège du phénomène $P_{BT}$.

La présence de ce matériau à changement de phase a un double effet. D'une part, il diminue la température de régénération en diminuant la pression du système (ce qui rend la régénération moins coûteuse), et d'autre part, il diminue la durée d'un cycle puisque le système continue de produire du froid grâce à la fusion du matériau à changement de phase après le début de la phase de régénération du système.

Dans un mode de réalisation particulier, le procédé selon l'invention pour la production de froid est mis en oeuvre à l'aide d'une installation telle que décrite ci-dessus. Il comprend les étapes suivantes :

a) placer l'installation dans un état initial dans lequel le réacteur (1) et le dispositif (2) sont isolés l'un de l'autre, (2) contient le gaz G à l'état liquide et le matériau M à l'état liquide, (1) contient le sorbant S à l'état pauvre en gaz, le contenu de (1) et le contenu de (2) sont à température ambiante $T_0$, le réservoir (3) contient les produits à congeler ou à refroidir ;

b) mettre en communication le réacteur (1) et le dispositif (2) pour la libération endothermique du gaz G dans (2) et la sorption exothermique du gaz G sur le sorbant S dans (1), avec production de froid dans le dispositif (2) et dans le réservoir (3), solidification du matériau à changement de phase M avec accumulation de chaleur latente, absorption de chaleur par le réacteur (1) et son contenu, et éventuellement extraction de la chaleur produite dans (1) ;

c) à la fin de l'étape b), isoler le réacteur (1) du dispositif (2) pour prolonger la production de froid dans (2) par fusion du matériau M qui libère le froid accumulé sous forme de chaleur latente, et apporter de l'énergie calorifique au réacteur (1) pour réaliser la dissociation endothermique du sorbant riche en gaz dans (1) ;

d) mettre en communication le réacteur (1) et le dispositif (2) et maintenir le chauffage de (1) jusqu'à la dissociation totale du sorbant dans (1) pour provoquer la condensation exothermique brutale du gaz dans (2) et l'arrêt de la production d'eau froide ou le décollement des glaçons, puis la poursuite éventuelle de la fusion du matériau M ;

e) isoler le réacteur (1) du dispositif (2) et laisser l'installation revenir à la température ambiante, c'est-à-dire à son état initial.

Il apparaît ainsi que, à partir d'un état initial donné, les seules actions à entreprendre pour faire fonctionner l'installation sont la mise en communication de (1) et de (2), l'extraction de la chaleur produite par la synthèse exothermique dans (1) lorsque la masse thermique de (1) n'est pas suffisante pour l'absorber intégralement, et l'apport d'énergie calorifique à (1) pour la régénération. La présence du matériau à changement de phase M dans le dispositif (2) prolonge la phase de production de froid et diminue la pression dans le système lors de la phase de régénération, et de ce fait diminue la température de régénération dans le réacteur (1). La quantité de chaleur à apporter pour régénérer le système est donc plus faible à cause de cette faible amplitude thermique.

Les différentes phases du procédé sont déclenchées par des moyens à la portée de l'homme de métier, tels que des temporisations, par exemple au moyen d'une horloge ou d'une minuterie. La durée des différentes phases dépend du but recherché [quantité de glaçons souhaitée par unité de temps, débit d'eau froid souhaité, géométrie de l'installation, nature des différents composés (gaz et sorbant) utilisés dans les réacteurs (1) et (2)].

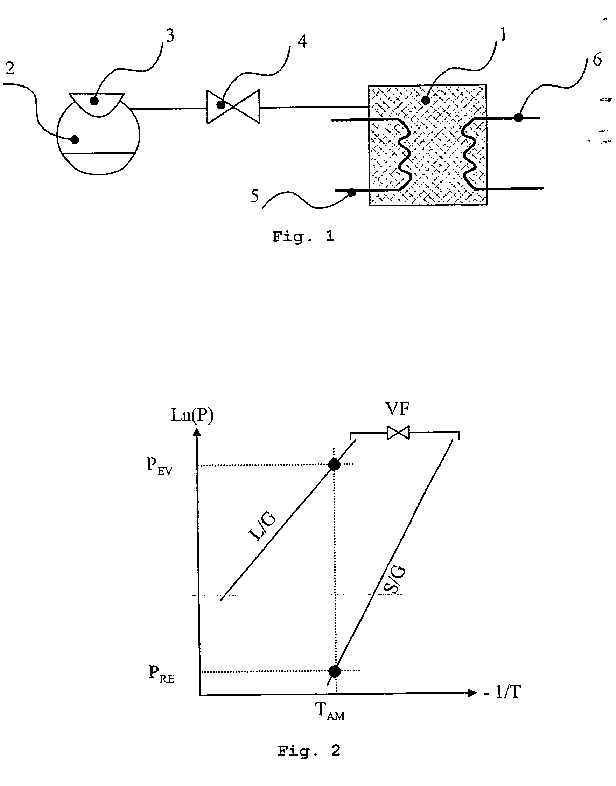

La mise en oeuvre du procédé de l'invention dans une installation selon l'invention est décrite plus en détail ci-après par référence aux figures 1 à 8. Les courbes sur les diagrammes correspondent à des phénomènes monovariants. Le fonctionnement de l'installation serait toutefois identique si l'on utilisait dans le réacteur (1) un phénomène divariant, correspondant par exemple à l'absorption du gaz G par une solution absorbante (par exemple eau/$NH_3$, eau/LiBr) ou à l'adsorption du gaz G sur la surface d'un solide actif (par exemple charbon actif ou zéolithe).

La figure 1 représente un schéma d'une installation selon l'invention.

Sur cette figure, l'installation comprend un réacteur (1) dans lequel a lieu la sorption renversable entre un sorbant S et un gaz G, un dispositif (2) dans lequel a lieu un phénomène renversable qui met en oeuvre le gaz G et dont la droite d'équilibre dans le diagramme de Clapeyron se situe à gauche de la droite d'équilibre de la sorption renversable dans (1) et une conduite qui relie (1) et (2) et qui est munie d'une vanne (4). Le dispositif (2) est avantageusement un évaporateur/condenseur (désigné ci-après par évaporateur). L'évaporateur (2) est en contact thermique direct avec un réservoir (3) intégré dans la paroi de l'évaporateur et contenant le produit à congeler ou à rafraîchir, par exemple de l'eau pour produire des glaçons. Le réacteur (1) est muni de moyens de chauffage (5) et de moyens d'extraction de chaleur (6).

Les figures 2 à 8 représentent la position de l'installation dans le diagramme de Clapeyron, aux différentes étapes du cycle de production de froid. Sur toutes les figures, Ln(P) en ordonnée désigne le logarithme de la pression P, et T sur l'axe des abscisses désigne la température. $P_{EV}$ désigne la pression dans l'évaporateur, $P_{RE}$ désigne la pression dans le réacteur, $T_{AM}$ désigne la température ambiante, $T_{EV}$ et $T_{RE}$ désignent la température à un instant donné respectivement dans l'évaporateur et dans le réacteur, $T_{EQ}$ désigne la température d'équilibre dans le réacteur pour une pression donnée, $T_{REC}$ désigne la température de régénération dans le réacteur (1). VO signifie que la vanne (4) est ouverte, et VF signifie que la vanne (4) est fermée. Un cycle complet de production de froid et de régénération de l'installation est décrit ci-après, pour une installation dans laquelle le réacteur (1) est le siège d'une sorption renversable entre un solide S et un gaz G. Dans le dispositif (2), le gaz G est alternativement évaporé ou condensé.

Au cours d'une phase initiale, on place l'installation dans un état initial : l'évaporateur et le réacteur sont à la température ambiante $T_{AM}$ et à leur pression d'équilibre respective à cette température $P_{EV}$ et $P_{RE}$, $P_{EV}$ étant supérieure à $P_{RE}$. L'évaporateur (2) contient le gaz G à l'état liquide. Le réacteur (1) contient le sorbant S à l'état pauvre en gaz. La vanne (4) est fermée. Le réservoir (3) contient de l'eau à l'état liquide. Le diagramme de Clapeyron correspondant à cet état est représenté sur la figure 2.

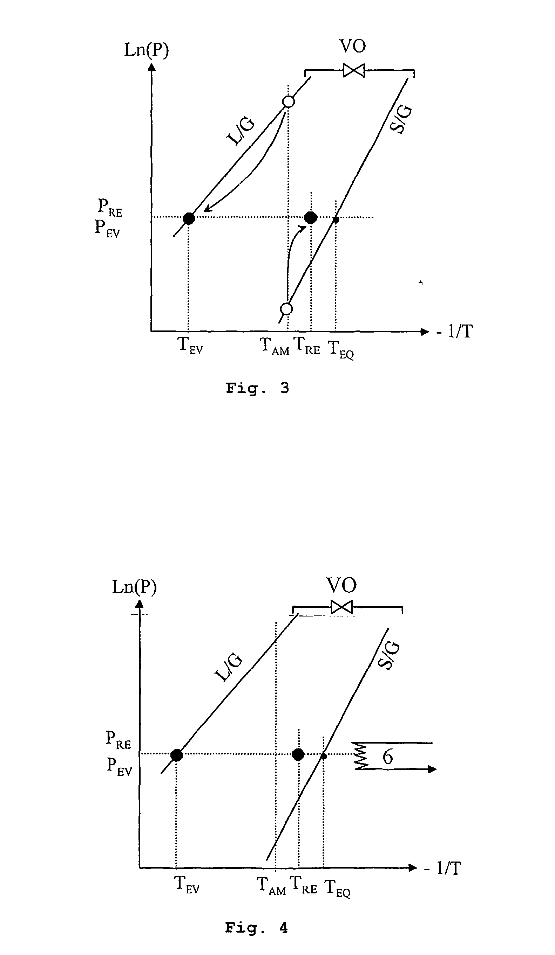

Au début de la phase 2, on met le réacteur (1) et l'évaporateur (2) en communication en ouvrant la vanne (4). L'évaporation du gaz G dans (2) provoque une baisse brutale de la température $T_{EV}$ dans (2) avec refroidissement de l'eau, éventuellement jusqu'à la congélation de l'eau pour former des glaçons dans le réservoir (3), puis solidification du matériau M dont la température de solidification est inférieure à la température de formation des glaçons. Le gaz G libéré par l'évaporation dans (2) est absorbé par le sorbant contenu dans (1) lors de la synthèse exothermique, ce qui provoque une montée en température à $T_{RE}$ du réacteur du fait du caractère exothermique de cette absorption. L'énergie produite est absorbée dans un premier temps par la masse thermique du réacteur, ce qui a pour effet de faire monter en température le milieu réactif qui, par conséquent, se rapproche de son équilibre thermodynamique $T_{EQ}$, induisant une baisse de la production frigorifique. L'écart de température ($T_{EQ}$ - $T_{AM}$) observé initialement par le réacteur permet ainsi la production d'une puissance frigorifique instantanée importante. Le diagramme de Clapeyron correspondant à cette phase est représenté sur la figure 3.

Au début de la phase 3, la vanne (4) reste ouverte et on active les moyens (6) pour évacuer la chaleur produite dans le réacteur (1) qui ne peut être absorbée par la masse thermique dudit réacteur afin de maintenir le sorbant S dans les conditions de synthèse ($T_{RE}<T_{EQ}$) lorsque la masse thermique du réacteur s'avère insuffisante pour absorber la totalité de la chaleur de réaction. Cette phase est inutile si la masse thermique du réacteur est suffisante pour absorber la totalité de la chaleur de la réaction d'absorption. Cette phase constitue ainsi une phase d'entretien de la production frigorifique. Le diagramme de Clapeyron correspondant à cette phase est représenté sur la figure 4.

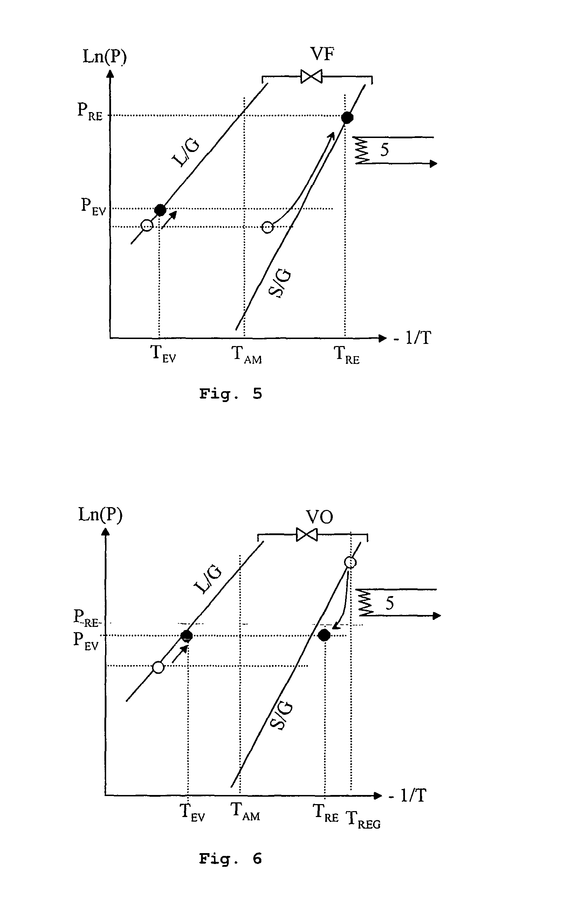

Au début de la phase 4, on ferme la vanne (4) pour isoler le réacteur (1) de l'évaporateur (2). Le réacteur (1) ainsi isolé est alors chauffé par les moyens de chauffage (5) et il se place alors sur son équilibre thermodynamique. Ce chauffage permet au réacteur de se déplacer le long de son équilibre thermodynamique, provoquant simultanément une montée en température et en pression du réacteur. Dans l'évaporateur, l'évaporation du gaz G est arrêtée du fait de la fermeture de la vanne. La production de froid est cependant assurée par le matériau à changement de phase qui absorbe à son tour la chaleur. La fusion de ce matériau à changement de phase permet ainsi de poursuivre la production des glaçons et de maintenir l'évaporateur à basse température et, simultanément, de placer le réacteur dans les conditions de régénération. Un gain de temps considérable résulte de ces phénomènes simultanés. La phase 4 est ainsi une phase transitoire de chauffage du réacteur et de poursuite de la production de froid par fusion du matériau à changement de phase. Le diagramme de Clapeyron correspondant à cette phase est représenté sur la figure 5.

Au début de la phase 5, on met le réacteur (1) en communication avec l'évaporateur (2) en ouvrant la vanne (4) et l'on maintient le chauffage du réacteur (1) par les moyens de chauffage (5). La mise en communication du réacteur placé dans les conditions de régénération à haute pression avec l'évaporateur maintenu à basse pression par le matériau à changement de phase permet la désorption rapide du gaz du réacteur. L'évaporateur, recevant des gaz chauds provenant du réacteur, joue alors le rôle d'un condenseur. L'installation étant ici destinée à la production de glaçons, il est recommandé d'adapter la position d'arrivée de ces gaz chauds, par exemple par un tube percé sur sa génératrice supérieure (non représenté), pour que ceux-ci frappent en premier lieu la paroi interne du bac à glaçons intimement lié à l'évaporateur, la température de la paroi du bac monte en température, ce qui a pour effet de décoller les glaçons du bac. Ceux-ci sont alors évacués par un système mécanique non représenté. L'écart de température ($T_{REG}$-$T_{EQ}$) initialement observé dans le réacteur du fait de la différence de pression permet une désorption rapide du gaz réactif accélérant ainsi la phase de régénération. La condenseur reste à une température basse inférieure à la température ambiante tant que le matériau à changement de phase n'est pas totalement fondu. Cette phase est une phase de régénération rapide du réacteur et de décollement des glaçons. Le diagramme de Clapeyron correspondant à cette phase est représenté sur la figure 6.

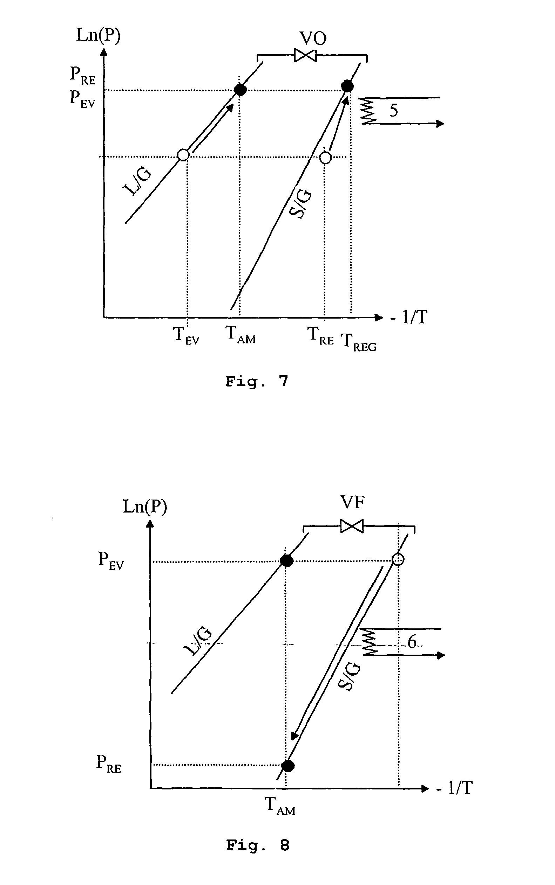

La phase 6 débute lorsque le matériau à changement de phase a totalement fondu. La pression dans (2) augmente, ce qui a pour effet de réduire l'écart de température du réacteur par rapport à l'équilibre thermodynamique de la réaction et donc de réduire la quantité de gaz désorbé. Le chauffage du réacteur (1) par les moyens (5) permet alors la poursuite de la réaction de dissociation. Le diagramme de Clapeyron correspondant à cet état est représenté sur la figure 7.

La phase 7 débute dès que la régénération est terminée. On ferme la vanne (4). On refroidit le réacteur (1) isolé si l'on veut engager immédiatement un nouveau cycle de production, ou bien on laisse le réacteur (1) se refroidir tout seul si la durée de cycle importe peu, ce qui provoque une baisse de température et de pression. Le dispositif se met ainsi dans les conditions initiales de la phase de stockage de la production de froid du début du cycle de fonctionnement. Le diagramme de Clapeyron correspondant à cette étape est représenté sur la figure 8.

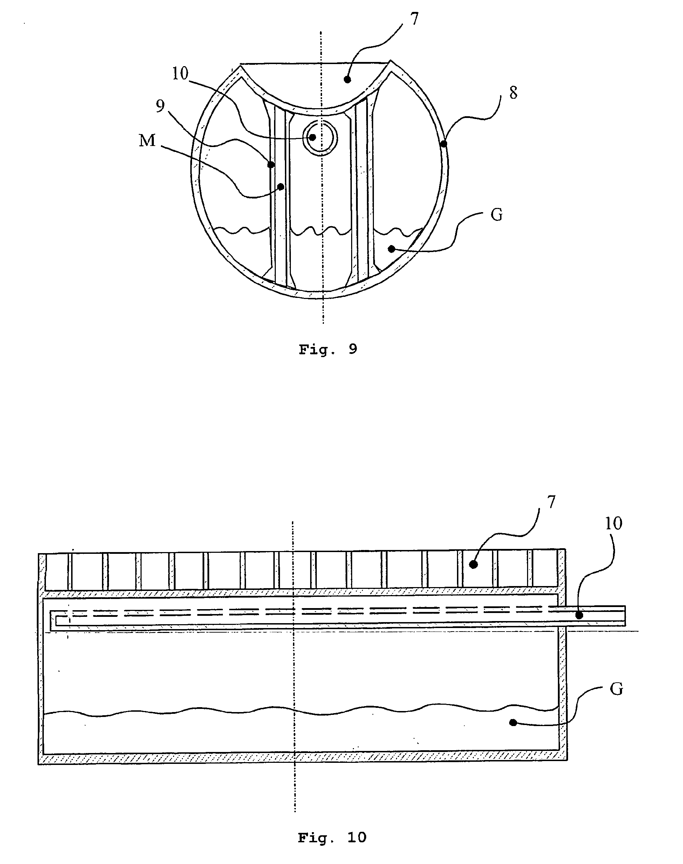

L'installation et le procédé selon l'invention sont particulièrement intéressants lorsque le dispositif (2) est un évaporateur/condenseur (désigné ci-après par évaporateur). Dans un mode de réalisation particulier, l'évaporateur a une structure telle que représentée sur les figures 9 et 10. La figure 9 représente une vue en section transversale, la figure 10 représente une vue en coupe longitudinale.

Conformément aux figures 9 et 10, l'évaporateur est constitué par un cylindre (8) qui est fermé à ses deux extrémités et qui comporte à sa partie supérieure une rainure longitudinale dont la section est en forme d'arc de cercle concave. Ladite rainure forme le bac à glaçon (7) pouvant contenir plusieurs glaçons. Des ailettes creuses (9) sont placées à l'intérieur de l'évaporateur, dans le sens longitudinal. Un tube (10) relié à la conduite permettant le transfert du gaz G entre l'évaporateur et le réacteur (2) pénètre dans l'enceinte cylindrique de l'évaporateur par un alésage réalisé dans l'une des extrémités du cylindre, et il est placé directement sous la paroi du bac à glaçons (7). Le gaz de travail G sous forme d'un liquide en ébullition est placé dans le fond de l'évaporateur. L'espace entre les parois des ailettes est occupé par le matériau à changement de phase M.

La paroi extérieure de l'évaporateur (8) est réalisée dans un matériau ayant une diffusivité thermique élevée, c'est-à-dire une faible capacité thermique pour permettre une descente rapide de la température de paroi et une forte conductivité thermique pour permettre une formation rapide des glaçons. Un matériau à base d'aluminium par exemple, qui a une capacité thermique faible et une conductivité élevée, est approprié en raison de sa compatibilité avec l'ammoniac, qui est un gaz fréquemment utilisé dans les installations pour la production de froid à des températures négatives. Pour accroître la diffusion de la chaleur du liquide 2 en ébullition vers le bac à glaçons ainsi que la résistance mécanique de l'évaporateur, des ailettes 5 sont disposées à l'intérieur de l'évaporateur. Le bac à glaçons 7 est muni de multiples cloisons transversales, placées de sorte à obtenir la forme souhaitée pour les glaçons. La forme globale du bac à glaçons possède une géométrie en demi-lune torique qui permet un démoulage aisé des glaçons formés.

Le matériau à changement de phase M placé entre les parois des ailettes creuses maintient la température de l'évaporateur à une valeur qui permet de prolonger la phase de production des glaçons pendant la phase transitoire de chauffage pour la régénération du réacteur isolé de l'évaporateur.

La configuration particulière du tube (10) et sa position dans l'enceinte de l'évaporateur sont telles que les gaz chauds, provenant du réacteur lors de la phase 5 de mise en communication du réacteur à haute pression et de l'évaporateur maintenu à basse pression par le matériau à changement de phase, viennent frapper en premier lieu la paroi du bac à glaçons, ce qui facilite de décollement des glaçons.

**Revendications**

1.  Installation pour la production de froid à la température utile ($T_U$) comprenant un réacteur (1) qui est le siège d'une sorption renversable $P_{HT}$ mettant en jeu un gaz G et un sorbant S, un dispositif (2) siège d'un phénomène renversable $P_{BT}$ qui met en jeu le gaz G, des moyens pour mettre le dispositif (2) en communication avec le réacteur (1) et des moyens pour isoler le réacteur (1) du dispositif (2), la courbe d'équilibre du phénomène renversable dans (2) étant située dans un domaine de température plus faible que celui de la courbe d'équilibre de la sorption renversable dans (1) dans le diagramme de Clapeyron, **caractérisée en ce que** le dispositif (2) contient, outre le gaz G, un matériau à changement de phase liquide/solide (M) ayant une température de solidification ($T_S$) inférieure à la température utile de production de froid ($T_U$).

2.  Installation selon la revendication 1, **caractérisée en ce que** la sorption renversable dans le réacteur (1) est choisie parmi les réactions chimiques renversables entre le gaz G et un solide, les adsorptions du gaz G sur un solide, et les absorptions du gaz G par un liquide.

3.  Installation selon la revendication 1, **caractérisée en ce que** le phénomène renversable dans le dispositif (2) est choisi parmi les réactions chimiques renversables entre le gaz G et un solide, les adsorptions du gaz G sur un solide, les absorptions du gaz G par un liquide, les changements de phase liquide/gaz du gaz G.

4.  Installation selon la revendication 3, **caractérisée en ce que** le phénomène renversable est un changement de phase liquide/gaz.

5.  Installation selon la revendication 1, **caractérisée en ce que** le réacteur (1) est configuré de sorte que sa masse thermique soit suffisante pour absorber la chaleur produite lors de la phase exothermique de la sorption dont il est le siège.

6.  Installation selon la revendication 1, **caractérisée en que** le réacteur (1) est muni de moyens pour évacuer la chaleur vers l'extérieur.

7.  Installation selon la revendication 1, **caractérisée en ce que** le dispositif (2) est en contact thermique direct avec un réservoir (3) contenant de l'eau.

8.  Installation selon la revendication 1, **caractérisée en ce que** le matériau à changement de phase est choisi parmi les paraffines telles que les n-alcanes ayant de 10 à 20 atomes de carbone, les mélanges eutectiques et les solutions eutectiques.

9.  Installation selon la revendication 1, **caractérisée en ce que** l'écart de température entre $T_S$ et $T_U$ est de 1°C à 10°C.

10. Installation selon la revendication 1, **caractérisée en ce qu'**elle est destinée à la production de glaçons et **en ce que** le matériau à changement de phase liquide /solide est choisi de telle sorte qu'il ait une température de solidification $T_S$ inférieure à 0°C.

11. Installation selon la revendication 1, **caractérisée en ce que** le dispositif (2) est un évaporateur / condenseur constitué par un cylindre (8) qui est fermé à ses deux extrémités ;

    - ledit cylindre (8) comporte à sa partie supérieure une rainure longitudinale dont la section est en forme d'arc de cercle concave, ladite rainure correspondant au bac à glaçon (7) ;
    - des ailettes creuses (9) sont placées à l'intérieur de l'évaporateur, dans le sens longitudinal ;
    - un tube (10) relié à la conduite permettant le transfert du gaz G entre l'évaporateur et le réacteur (2) pénètre dans l'enceinte cylindrique de l'évaporateur par un alésage réalisé dans l'une des extrémités du cylindre, et il est placé directement sous la paroi du bac à glaçons (7) ;
    - le gaz de travail G sous forme d'un liquide en ébullition est placé dans le fond de l'évaporateur ;
    - l'espace entre les parois des ailettes est occupé par le matériau à changement de phase M.

12. Procédé pour la production de froid à une température utile $T_U$ par un système thermochimique comprenant au moins deux phénomènes renversables utilisant un gaz G, dans lequel le froid est produit lors de l'étape de dissociation du phénomène renversable $P_{BT}$ dont la courbe d'équilibre dans le diagramme de Clapeyron se situe dans le domaine des basses températures, et le système est régénéré lors de l'étape de dissociation du phénomène renversable $P_{HT}$ dont la courbe d'équilibre dans le diagramme de Clapeyron se situe dans le domaine des températures élevées, **caractérisé en ce que** l'on prolonge l'étape de production de froid au-delà de la fin de l'étape de dissociation du phénomène $P_{BT}$ par la fusion d'un matériau à changement de phase M solide/liquide en contact thermique avec le gaz G dans le réacteur qui est le siège du phénomène $P_{BT}$, ledit matériau à changement de phase étant choisi de sorte que sa température de changement de phase soit inférieure à la température utile $T_U$.

**13.** Procédé pour la production de glaçons ou d'eau froide, selon la revendication 12, mis en oeuvre dans une installation comprenant un réacteur (1) qui est le siège d'une sorption renversable $P_{HT}$ mettant en jeu un gaz G et un sorbant S, un dispositif (2) siège d'un phénomène renversable $P_{BT}$ qui met en jeu le gaz G, des moyens pour mettre le dispositif (2) en communication avec le réacteur (1) et des moyens pour isoler le réacteur (1) du dispositif (2), la courbe d'équilibre du phénomène renversable $P_{BT}$ dans (2) étant située dans un domaine de température plus faible que celui de la courbe d'équilibre de la sorption renversable $P_{HT}$ dans (1) dans le diagramme de Clapeyron, ledit dispositif (2) contenant en outre un matériau à changement de phase liquide/solide M ayant une température de solidification $T_S$ inférieure à la température utile $T_U$, **caractérisé en ce qu'**il comprend les étapes suivantes :

a) placer l'installation dans un état initial dans lequel le réacteur (1) et le dispositif (2) sont isolés l'un de l'autre, (2) contient le gaz G à l'état liquide et le matériau M à l'état liquide, (1) contient le sorbant S à l'état pauvre en gaz, le contenu de (1) et le contenu de (2) sont à température ambiante $T_0$, le réservoir (3) contient les produits à congeler ou à refroidir ;
b) mettre en communication le réacteur (1) et le dispositif (2) pour la libération endothermique du gaz G dans (2) et la sorption exothermique du gaz G sur le sorbant S dans (1), avec production de froid dans le dispositif (2) et dans le réservoir (3), solidification du matériau à changement de phase M avec accumulation de chaleur latente, absorption de chaleur par le réacteur (1) et son contenu, et éventuellement extraction de la chaleur produite dans (1) ;
c) à la fin de l'étape b), isoler le réacteur (1) du dispositif (2) pour prolonger la production de froid dans (2) par fusion du matériau M qui libère le froid accumulé sous forme de chaleur latente, et apporter de l'énergie calorifique au réacteur (1) pour réaliser la dissociation endothermique du sorbant riche en gaz dans (1) ;
d) mettre en communication le réacteur (1) et le dispositif (2) et maintenir le chauffage de (1) jusqu'à la dissociation totale ou partielle du sorbant dans (1) pour provoquer la condensation exothermique brutale du gaz dans (2) et l'arrêt de la production d'eau froide ou le décollement des glaçons, puis la poursuite éventuelle de la fusion du matériau M ;
e) isoler le réacteur (1) du dispositif (2) et laisser l'installation revenir à la température ambiante, c'est-à-dire à son état initial.

**14.** Procédé selon la revendication 12 pour la production de glaçons, **caractérisé en ce que** la température de changement de phase du matériau M est inférieure à 0°C.

**Claims**

**1.** An installation for refrigeration at the working temperature ($T_U$), which comprises a reactor (1) in which a reversible sorption $P_{HT}$ involving a gas G and a sorbent S takes place, a device (2) in which a reversible phenomenon $P_{LT}$ involving the gas G takes place, means for bringing the device (2) into communication with the reactor (1), and means for isolating the reactor (1) from the device (2), the equilibrium curve for the reversible phenomenon in (2) lying within a lower temperature range than that of the equilibrium curve for the reversible sorption in (1) in the Clausius-Clapeyron plot, wherein the device (2) contains, apart from the gas G, a liquid/solid phase change material (M) having a solidification temperature ($T_S$) below the refrigeration working temperature ($T_U$).

**2.** The installation as claimed in claim 1, wherein the reversible sorption in the reactor (1) is chosen from reversible chemical reactions between the gas G and a solid, adsorptions of the gas G on a solid, and absorptions of the gas G by a liquid.

**3.** The installation as claimed in claim 1, wherein the reversible phenomenon in the device (2) is chosen from reversible chemical reactions between the gas G and a solid, adsorptions of the gas G on a solid, absorptions of the gas G by a liquid, and liquid/gas phase changes of the gas G.

4. The installation as claimed in claim 3, wherein the reversible phenomenon is a liquid/gas phase change.

5. The installation as claimed in claim 1, wherein the reactor (1) is configured in such a way that its thermal mass is sufficient to absorb the heat produced during the exothermic sorption step which is carried out therein.

6. The installation as claimed in claim 1, wherein the reactor (1) is provided with means for extracting the heat to the outside.

7. The installation as claimed in claim 1, wherein the device (2) is in direct thermal contact with a reservoir (3) containing water.

8. The installation as claimed in claim 1, wherein the phase change material is chosen from paraffins, such as n-alkanes having from 10 to 20 carbon atoms, eutectic mixtures and eutectic solutions.

9. The installation as claimed in claim 1, wherein the temperature difference between $T_S$ and $T_U$ is from 1°C to 10°C.

10. The installation as claimed in claim 1, which is intended for the production of ice, wherein the liquid/solid phase change material is chosen in such a way that it has a solidification temperature $T_S$ below 0°C.

11. The installation as claimed claim 1, wherein the device (2) is an evaporator/condenser consisting of a cylinder (8) which is closed at its two ends;

> - said cylinder (8) includes, in its upper part, a longitudinal groove, whose cross section is in the form of a concave circular arc, said groove corresponding to the ice tray (7);
> - hollow fins (9) are placed inside the evaporator, in the longitudinal direction;
> - a tube (10) connected to the pipe for transferring the gas G between the evaporator and the reactor (2) runs into the cylindrical chamber of the evaporator via a bore made in one of the ends of the cylinder, and it is placed directly beneath the wall of the ice tray (7);
> - the working gas G, in the form of a boiling liquid, is placed in the bottom of the evaporator; and
> - the space between the walls of the fins is occupied by the phase change material M.

12. A method of refrigeration at a working temperature $T_U$ by means of a thermochemical system comprising at least two reversible phenomena using a gas G, in which refrigeration is produced during the dissociation step of the reversible phenomenon $P_{LT}$, the equilibrium curve of which in the Clausius-Clapeyron plot lies in the low-temperature range, and the system is regenerated during the dissociation step of the reversible phenomenon $P_{HT}$, the equilibrium curve of which in the Clausius-Clapeyron plot lies in the high-temperature range, wherein the refrigeration step is prolonged beyond the end of the dissociation step of the phenomenon $P_{LT}$ by the melting of a solid/liquid phase change material M in thermal contact with the gas G in the reactor in which the phenomenon $P_{LT}$ takes place, said phase change material being chosen in such a way that its phase change temperature is below the working temperature $T_U$.

13. The method of producing ice or chilled water as claimed in claim 12, implemented in an installation comprising a reactor (1) in which a reversible sorption $P_{HT}$ involving a gas G and a sorbent S takes place, a device (2) in which a reversible phenomenon $P_{LT}$ involving the gas G takes place, means for bringing the device (2) into communication with the reactor (1), and means for isolating the reactor (1) from the device (2), the equilibrium curve for the reversible phenomenon $P_{LT}$ in (2) being located within a lower temperature range than that of the equilibrium curve for the reversible sorption $P_{HT}$ in (1) in the Clausius-Clapeyron plot, said device (2) furthermore containing a liquid/phase change material M having a solidification temperature $T_S$ below the working temperature $T_U$, which method comprises the following steps:

> a) the installation is placed in an initial state in which the reactor (1) and the device (2) are isolated from each other, (2) contains the gas in the liquid state and the material M in the liquid state, (1) contains the sorbent S in the gas-lean state, the contents of (1) and the contents of (2) are at ambient temperature $T_0$, and the reservoir (3) contains the products to be frozen or chilled;
> b) the reactor (1) and the device (2) are brought into communication for the endothermic liberation of the gas G in (2) and the exothermic sorption of the gas G on the sorbent S in (1), with refrigeration in the device (2) and in the reservoir (3), solidification of the phase change material M with accumulation of latent heat, absorption of heat by the reactor (1) and its contents, and optionally extraction of the heat produced in (1);

c) at the end of step b), the reactor (1) is isolated from the device (2) in order to extend refrigeration in (2) by the melting of the material M, which releases the refrigeration stored in the form of latent heat, and thermal energy is supplied to the reactor (1) in order to carry out the endothermic dissociation of the gas-rich sorbent in (1);

d) the reactor (1) and the device (2) are brought into communication and (1) continues to be heated until total or partial dissociation of sorbent in (1) in order to cause sudden exothermic condensation of the gas in (2) and to stop production of chilled water or to cause the ice to separate, and then the possible continuation of the melting of the material M; and

e) the reactor (1) is isolated from the device (2) and the installation is left to return to the ambient temperature, i.e. to its initial state.

**14.** The method as claimed in claim 12 for the production of ice, wherein the phase change temperature of the material M is below 0°C.

**Patentansprüche**

**1.** Anlage zur Erzeugung von Kälte bei einer geeigneten Temperatur ($T_U$), umfassend einen Reaktor (1), in dem eine reversible Sorption $P_{HT}$ durchgeführt wird, wobei ein Gas G und ein Sorptionsmittel verwendet werden, eine Vorrichtung (2), in der ein reversibler Vorgang $P_{BT}$ ausgeführt wird, wobei das Gas G eingesetzt wird, sowie Mittel zum Verbinden der Vorrichtung (2) mit dem Reaktor (1) und Mittel zum Isolieren des Reaktors (1) von der Vorrichtung (2), wobei die Gleichgewichtskurve des reversiblen Vorgangs in (2) im Clapeyron-Diagramm in einem unterhalb des Temperaturbereichs der Gleichgewichtskurve der reversiblen Sorption in (1) befindlichen Temperaturbereich liegt, **dadurch gekennzeichnet, dass** die Vorrichtung (2), neben dem Gas G, ein Flüssig/Fest-Phasenübergangsmaterial (M) mit einer unter der für die Kälteerzeugung geeigneten Temperatur ($T_U$) liegenden Erstarrungstemperatur ($T_S$) enthält.

**2.** Anlage nach Anspruch 1, **dadurch gekennzeichnet, dass** die reversible Sorption im Reaktor (1) aus den reversiblen, chemischen Reaktionen zwischen dem Gas G und einem Festkörper, den Adsorptionen von Gas G auf einem Festkörper und den Absorptionen von Gas G durch eine Flüssigkeit ausgewählt ist.

**3.** Anlage nach Anspruch 1, **dadurch gekennzeichnet, dass** der reversible Vorgang in der Vorrichtung (2) aus den reversiblen, chemischen Reaktionen zwischen dem Gas G und einem Festkörper, den Adsorptionen von Gas G auf einem Festkörper, den Absorptionen von Gas G durch eine Flüssigkeit und den Flüssig/Gasförmig-Phasenübergängen des Gases G ausgewählt ist.

**4.** Anlage nach Anspruch 3, **dadurch gekennzeichnet, dass** der reversible Vorgang ein Flüssig/Gasförmig-Phasenübergang ist.

**5.** Anlage nach Anspruch 1, **dadurch gekennzeichnet, dass** der Reaktor (1) so konfiguriert ist, dass dessen thermisch wirksame Masse zur Absorption der in der exothermen Phase der Sorption erzeugten Wärme ausreichend ist, in der sie durchgeführt wird.

**6.** Anlage nach Anspruch 1, **dadurch gekennzeichnet, dass** der Reaktor (1) mit Mitteln zum Abführen der Wärme nach außen ausgestattet ist.

**7.** Anlage nach Anspruch 1, **dadurch gekennzeichnet, dass** die Vorrichtung (2) in direktem, thermischen Kontakt mit einem Wasser enthaltenden Behälter (3) steht.

**8.** Anlage nach Anspruch 1, **dadurch gekennzeichnet, dass** das Phasenübergangsmaterial aus Paraffinen, wie etwa den n-Alkanen mit 10 bis 20 Kohlenstoffatomen, eutektischen Gemischen und eutektischen Lösungen, ausgewählt ist.

**9.** Anlage nach Anspruch 1, **dadurch gekennzeichnet, dass** der Temperaturunterschied zwischen $T_S$ und $T_U$ sich im Bereich von 1°C bis 10°C bewegt.

**10.** Anlage nach Anspruch 1, **dadurch gekennzeichnet, dass** diese zur Erzeugung von Eisstücken vorgesehen ist und dass das Flüssig/Fest-Phasenübergangsmaterial (M) so ausgewählt ist, dass es eine unter 0° liegende Erstarrungstemperatur $T_S$ aufweist.

**11.** Anlage nach Anspruch 1, **dadurch gekennzeichnet, dass** die Vorrichtung (2) ein Verdampfer/Kondensator bestehend aus einem Zylinder (8) ist, dessen Enden beide verschlossen sind;

- der Zylinder (8) umfasst an seinem oberen Abschnitt eine longitudinale Rille, deren Abschnitt konkav und kreisbogenförmig ausgebildet ist, wobei die Rille einem Eisstückbehälter (7) entspricht;
- hohle Rippen (9) sind im Inneren des Verdampfers in longitudinaler Richtung angeordnet ;
- ein mit der Rohrleitung, die den Transport des Gases G zwischen dem Verdampfer und dem Reaktor (2) ermöglicht, verbundenes Rohr (10) dringt in die zylinderförmige Hülle des Verdampfers über eine in einer der Zylinderenden befindliche Bohrung ein und ist direkt unterhalb der Wand des Eisstückbehälters (7) angeordnet;
- das in Form einer Flüssigkeit in siedendem Zustand vorliegende Arbeitsgas G ist am Boden des Verdampfers angeordnet;
- im Zwischenraum zwischen den Wänden der Rippen befindet sich das Phasenübergangsmaterial M.

**12.** Verfahren zur Erzeugung von Kälte bei einer geeigneten Temperatur $T_U$ durch ein thermochemisches System, das zumindest zwei reversible, ein Gas G verwendende Vorgänge umfasst, in dem die Kälte beim Dissoziationsschritt des reversiblen Vorgangs $P_{BT}$ erzeugt wird, dessen Gleichgewichtskurve im Clapeyron-Diagramm in den unteren Temperaturbereichen liegt, wobei sich das System beim Dissoziationsschritt des reversiblen Vorgangs $P_{HT}$ wieder erneuert, dessen Gleichgewichtskurve im Clapeyron-Diagramm in den oberen Temperaturbereichen liegt, **dadurch gekennzeichnet, dass** der Kälteerzeugungsschritt über das Ende des Dissoziationsschritts des Vorgangs $P_{BT}$ hinaus mithilfe der Vermischung eines mit dem Gas G im Reaktor in thermischem Kontakt stehenden Flüssig/Fest-Phasenübergangsmaterial M verlängert wird, wobei der Vorgang $P_{BT}$ im Reaktor durchgeführt wird, und das Phasenübergangsmaterial so gewählt wird, dass dessen Phasenübergangstemperatur unter der geeigneten Temperatur $T_U$ liegt.

**13.** Verfahren zur Erzeugung von Eisstücken oder kaltem Wasser nach Anspruch 12, das in einer Anlage durchgeführt wird, welche einen Reaktor (1), in dem die Durchführung der reversiblen Sorption $P_{HT}$ erfolgt, wobei ein Gas G und ein Sorptionsmittel S verwendet werden, eine Vorrichtung (2), in der unter Verwendung des Gases G der reversible Vorgang $P_{BT}$ durchgeführt wird, sowie Mittel zum Verbinden der Vorrichtung (2) mit dem Reaktor (1) und Mittel zum Isolieren des Reaktors (1) von der Vorrichtung (2) umfasst, wobei die Gleichgewichtskurve des reversiblen Vorgangs $P_{BT}$ in (2) im Clapeyron-Diagramm im Vergleich zur Gleichgewichtskurve der reversiblen Sorption $P_{HT}$ in (1) in einem darunterliegenden Temperaturbereich liegt, wobei die Vorrichtung (2) außerdem ein Flüssig/Fest-Phasenübergangsmaterial M aufweist, dessen Erstarrungstemperatur $T_S$ unter der geeigneten Temperatur $T_U$ liegt, **dadurch gekennzeichnet, dass** diese die folgenden Schritte umfasst:

a) das Versetzen der Anlage in einen Anfangszustand, in dem der Reaktor (1) und die Vorrichtung (2) voneinander isoliert vorliegen, wobei (2) das Gas G in flüssiger Form und das Material M in flüssiger Form enthält und (1) das Sorptionsmittel S in einem gasarmen Zustand enthält, wobei der Inhalt von (1) und der Inhalt von (2) bei Umgebungstemperatur $T_0$ vorliegen und im Behälter (3) die einzufrierenden oder abzukühlenden Produkte enthalten sind;

b) das Verbinden des Reaktors (1) und der Vorrichtung (2), um das endotherme Freisetzen des Gases G in (2) und die exotherme Sorption des Gases G auf dem Sorptionsmittel S in (1) zu ermöglichen, wobei die Kälteerzeugung in der Vorrichtung (2) und im Behälter (3) durchgeführt wird und die Erstarrung des Phasenübergangsmaterials M mit einer Akkumulation latenter Wärme, die Absorption der Wärme durch den Reaktor (1) und dessen Inhalt sowie eventuell eine Extraktion der in (1) erzeugten Wärme erfolgen;

c) am Ende des Schritts b) erfolgt die Isolierung des Reaktors (1) von der Vorrichtung (2), um die Kälteerzeugung in (2) durch Vermischung des Materials M zu verlängern, welches die in Form latenter Wärme akkumulierte Kälte freisetzt und dem Reaktor (1) Wärmeenergie zuführt, um die endotherme Dissoziation des gasreichen Sorptionsmittels in (1) durchzuführen;

d) das Verbinden des Reaktors (1) und der Vorrichtung (2) sowie die Aufrechterhaltung der Erwärmung von (1), bis die komplette oder teilweise Dissoziation des Sorptionsmittels in (1) erfolgt ist, um die abrupte, exotherme Kondensation des Gases in (2) und das Anhalten der Erzeugung kalten Wassers oder das Ablösen der Eisstücke, sowie dann eventuell die Weiterführung der Verschmelzen des Materials M auszulösen;

e) das Isolieren des Reaktors (1) von der Vorrichtung (2) und das Zurückkehrenlassen der Anlage auf Umgebungstemperatur, also auf deren Anfangszustand.

**14.** Verfahren nach Anspruch 12 zur Eiserzeugung, **dadurch gekennzeichnet, dass** die Temperatur des Phasenübergangsmaterials M unter 0°C liegt.

Fig. 1

Fig. 2

Ln(P)

VO

L/G

S/G

$P_{RE}$
$P_{EV}$

$T_{EV}$     $T_{AM}$ $T_{RE}$ $T_{EQ}$

- 1/T

Fig. 3

Ln(P)

VO

L/G

S/G

$P_{RE}$
$P_{EV}$

6

$T_{EV}$     $T_{AM}$ $T_{RE}$ $T_{EQ}$

- 1/T

Fig. 4

Fig. 5

Fig. 6

Fig. 7

Fig. 8

Fig. 9

Fig. 10